Europäisches Patentamt

(19) European Patent Office

Office européen des brevets

(11) Publication number: 0 164 776
A1

# (12) EUROPEAN PATENT APPLICATION

(21) Application number: 85200710.3

(22) Date of filing: 07.05.85

(51) Int. Cl.⁴: A 21 B 3/16
B 65 G 19/02

(30) Priority: 09.05.84 NL 8401487

(43) Date of publication of application:
18.12.85 Bulletin 85/51

(84) Designated Contracting States:
AT BE CH DE FR GB IT LI LU NL SE

(71) Applicant: SONNEVELD B.V.
Rietgorsweg 1-3
NL-3356 LJ Papendrecht(NL)

(72) Inventor: Sonneveld, Geert Cornelis
6, Oranjestraat
NL-3361 HR Sliedrecht(NL)

(74) Representative: Hoorweg, Petrus Nicolaas et al,
OCTROOIBUREAU ARNOLD & SIEDSMA Sweelinckplein
1
NL-2517 GK The Hague(NL)

(54) A device for greasing carriers to producing batter- and/or dough products.

(57) An apparatus for greasing carriers (B) used in processing batter and/or dough products, such as the baking of bakery products, which apparatus consists generally of a frame (1), a spraying device (8) supported by the frame for the spraying of depanning agents, such as emulsions and pure oils, and a conveyor surface (2) supported by the frame, over which a carrier (B) or group of carriers is conveyable, passing in each case the spraying device (8) wherein the conveyor is folded on a line (A-A) in the conveying direction such that the bottom and one upright side of the carrier (B) are supported and wherein the conveyor surface (2") on the side of fold line (A-A) is formed by the operational part of an endless driven conveyor element (4), so carriers of divergent form can be processed easily after one another without adjusting the apparatus.

EP 0 164 776 A1

./...

FIG.1

Apparatus for greasing carriers used for batter and/or dough
products
_____

The invention relates to an apparatus for greasing
carriers used in processing batter and/or dough products,
such as the baking of bakery products, which apparatus consists generally of a frame, a spraying device supported by
the frame for the spraying of depanning agents, such as emulsions and pure oils, and a conveyor surface supported by the
frame, over which a carrier or group of carriers is conveyable, passing in each case the spraying device.

Known apparatus of the type described in the preamble has the disadvantage that it is not suitable for arbitrary processing of carriers of divergent form. When a carrier of divergent form has to be processed, the guiding means
have to be adjusted in order to position a carrier opposite
the spraying device.

The invention has for its object the removal of the
aforesaid drawback, and to this end provides an apparatus
distinct in that the conveyor is folded on a line in the conveying direction such that the bottom and one upright side of
the carrier are supported.

Thanks to this design of the conveyor surface, the
carriers, irrespective of their width, height or length, can
be guided past the spraying device without further adjustment
problems on the apparatus, because the sideways guiding of a
carrier is provided for by the conveyor surface itself.

In a preferred embodiment, at least a part of the
conveyor surface on the side of the fold line is formed by
the operational part of an endless driven conveyor element.

This part of the conveyor surface preferably stands
vertically, whereby the remaining part thereof extends horizontally.

A rather simple embodiment is obtained by making the operational part of the endless conveyor element magnetic. As a result, an upright side or the bottom of the carrier is attracted against the magnetic conveyor belt, and the form of the conveyor element is rather simplified.

In order to reduce friction, the stationary part of the conveyor surface is formed by strips or rib-shaped elevations in a base plate, extending in the conveying direction, which also has the additional advantage that this surface hardly needs cleaning, or is easy to clean.

In order to ensure accurate greasing of the carriers and to avoid dirtying the conveyor surface with sprayed oil particles, the said surface is provided with one or more detecting elements which control the spraying device.

These and other features will be made more apparent in the following figure description of three embodiments.

In the drawing shows:

Fig. 1 a perspective view of a first embodiment of the apparatus according to the invention,

Fig. 2 a front view of a second alternative embodiment,

Fig. 3 a perspective plan view of a third alternative embodiment.

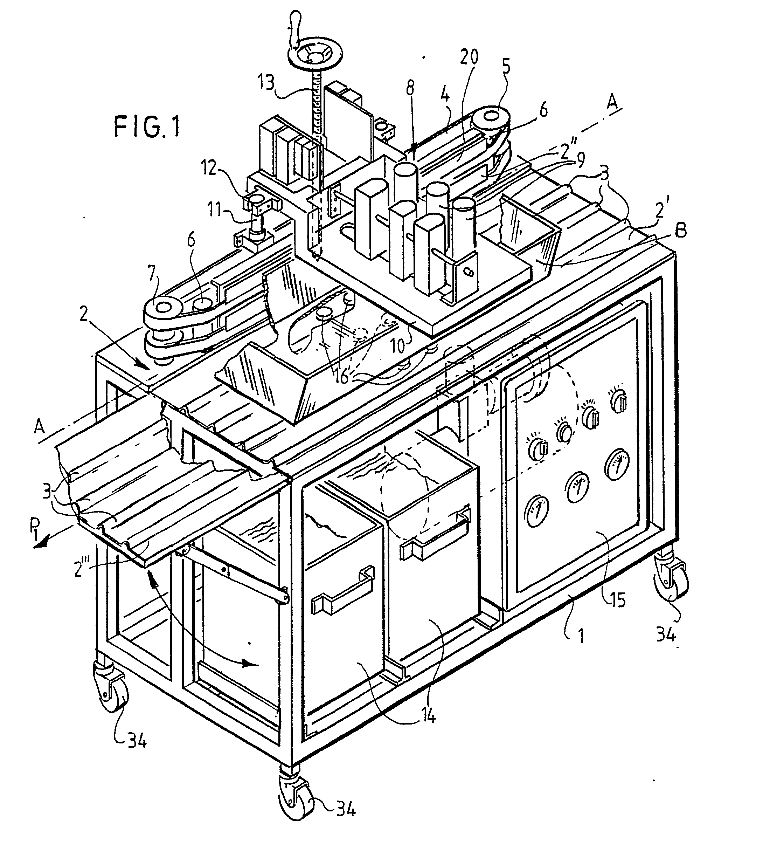

In fig. 1 the reference numeral 1 indicates the frame which is supported on rotor wheels and is therefore rollable. The rectangular frame is built up of profiles, and supports on its upper side a conveyor sorface 2, which consists of a horizontally exptending part 2' and a vertically extending part 2''. The parts 2' and 2'' enlclose an angle whereby the angle or fold-line A-A extends in the conveying direction indicated by the arrow P1.

The part 2' of the conveyor surface is provided with ribs which likewise extend in the conveying direction P1.

The part 2'' is formed as conveyor element and consists of an endless driven element 4 which is flapped via a system of reverse and guide rollers 5,6 and a pulley 7 such that the operational part of the endless element, the part 2'', forms a conveyor surface.

The operational part of the endless element 4 is also fitted with magnets 20.

The frame further supports a spraying device, the assembly indicated by 8, a device equipped with spray heads 9, three of which are drawn. The distance between the spray heads and their disposition in relation to the supporting surface 2' is adjustable in a sideways direction. The height of the plate 10 supporting the spray heads 9 is likewise adjustable along two columns 11 arranged on the frame, along which a slide bearing 12 connected to the plate 10 is slidable up and downwards. By means of a hand rotated screwed spindle 13, the height of the plate 10 in relation to the frame can be adjusted. This adjustment can also be in hydraulic or pneumatic form.

By means of flexible conduits, which are now shown, the spray heads 9 are fed by two supply tanks which are stored in the underside of the frame. In addition the frame comprises a control cabinet 15 with which among other things the conveying speed of the endless element 4 can be regulated.

The conveyor surface 2'' supports three pairs of detecting elements 16 positioned one behind another in the conveying direction, with which the approach of a bakery pan B is detected. By means of the signal generated by a detecting element 16, the switching on and off of each of the spray heads can be controlled.

The conveyor surface portion 2' can be elongated by an extending leaf part 2'', with which the apparatus can be incorporated in a processing line. In addition, the height of the frame is adjustable in relation to the wheels 34, also in order to adapt the apparatus to a processing line.

The apparatus described in the foregoing operates as follows:

After adjusting the height of the spray heads 9 in relation to the conveyor surface 2' and after setting in motion the drive roller 7, and thereby the endless element 4, a bakery pan can be placed on the conveyor surface 2, such that the upright side edge in fig. 1 comes into contact with the magnets of the conveying element 4. As a result of the transporting effect of the endless element 4, the pan B will be pushed forward over the supporting surface 2 in the direction of the arrow P1, whereby the front edge of the pan comes up to the detecting elements. The signal from both elements of a pair will bring the associated spray heads into operation, which is continued as long as the pan B is pushed forward over the surface in the direction of the arrow P1. As soon as the rear edge of the pan B passes the last detecting element 16, the spray elements 9 are rendered inoperative.

It will be apparent that the apparatus is suitable for varying widths of bakery pans B, because only the upright side edge is guided along the magnetic operational part of the conveying element 4. In the case of a narrow pan, the spray head in fig. 1 situated furthest from the magnetic belt will automatically not be brought into operation.

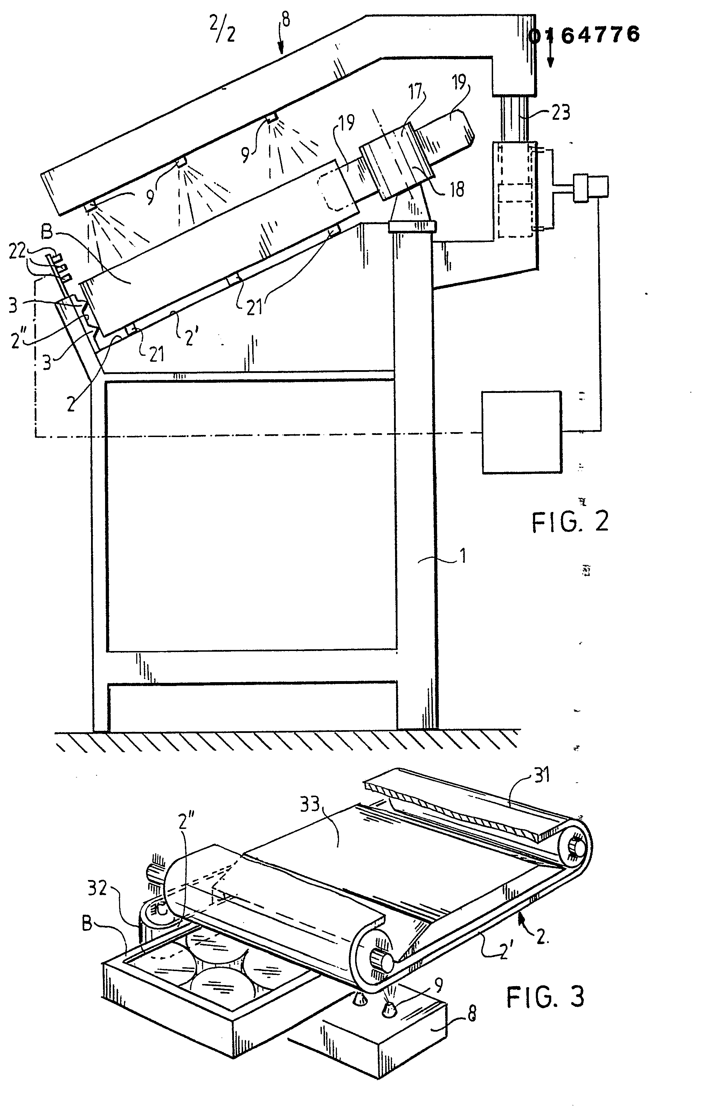

Fig. 2 shows an alternative embodiment, where the same reference numbers are used for the same parts. The apparatus is distinct from the foregoing apparatus as in fig. 1 in that the conveyor surface 2 shows as sloping operational part 2' and a likewise sloping part 2'' which enclose an angle of 90° in relation to one another. The surface 2' is formed by longitudinal strips 21, while the surface 2'' is provided with longitudinal ribbing 3 in order to minimalise the friction between bakery pan B and conveyor surface 2, a band conveyor 17 is arranged which consists of an endless flexible belt 18 fitted with catches 19. The catches stand perpendicular on the belt 18 and press against the rear side of the bakery pan in order to be able to exercise their conveying function. The frame 1 id further provided with a spray device 8 which is here also formed with spray elements 9. A detecting element 22 here detects the height of the pan B such that the signal transmitted adjusts the height of the spray device 8 in relation to the conveyor surface 2' by controlling a lifting cylinder 23.

The operation of the apparatus described corresponds virtually with that of the apparatus in fig. 1, with the understanding that because of the sloping position of the conveyor surface 2, a bakery pan B is here also directed by means of support from bottom and side wall respectively. The variance in width of the bakery pan is determined here by the length of the catch 19. With this apparatus, an arbitrary sequence of pans of varying width is nevertheless possible without further adjustment operations being necessary.

Fig. 3 shows an embodiment where the conveyor surface is formed by two operational parts comprising endless conveying elements 31 and 32. The operational part 2' of element 31 lies horizontally and on the underside. The operational part 2'' of belt 32 encloses an angle with part 2' and is upright. Both parts 2' and 2'' are magnetically energized by a magnet 33 which ensures that the bottom of a pan B is held against the underside of belt 31 and that a side wall is held against belt 32. A spraying device 8 with spray heads 9 situated under the conveyor surface 2 sprays against the bakery pan, baking form or the like from beneath. The control and adjustment potential of this embodiment is the same as that of the previously described embodiments.

This invention is not restricted to the embodiments described in the foregoing. A bakery pan shown in the figures can be replaced by other arbitrary baking forms, such as plate material, dish or similar carrrier.

-----

WHAT IS CLAIMED IS:

1. Apparatus for greasing carriers used in processing batter and/or dough products, such as the baking of bakery products, which apparatus consists generally of a frame, a spraying device supported by the frame for the spraying of depanning agents, such as emulsions and pure oils, and a conveyor surface supported by the frame, over which a carrier or group of carriers in conveyable, passing in each case the spraying device, characterized in that the conveyor surface is folded on a line (A-A) such that the bottom and an upright side of a pan are supported.

2. Apparatus as claimed in claim 1, characterized in that at least a part of the conveyor surface (2) at the side of the fold line (A-A) is formed by the operational part of an endless driven conveying element (4).

3. Apparatus as claimed in claims 1 and 2, characterized in that this part (2'') of the conveyor surface (2) stands vertically and the remaining part (2') extends horizontally.

4. Apparatus as claimed in claims 1-3, characterized in that the operational part of the endless conveying element (4) is magnetic.

5. Apparatus as claimed in claims 1-4, characterized in that the remaining part (2') of the conveyor surface (2) not having a conveying element is formed of one or more bearing strips (3) extending in the conveyor direction.

6. Apparatus as claimed in claim 5, characterized in that the or each bearing strip is formed by a rib-shaped elevation which forms a whole with a supporting plate.

7. Apparatus as claimed in any of the foregoing claims, characterized in that the remaining part (2') of the conveyor surface (2) is provided with one or more carrier detecting elements (16) for controlling the spraying device (8).

8. Apparatus as claimed in claim 1-7, characterized in that the remaining part (2') of the conveyor surface (2) can be extended in the cxonveying direction.

9. Apparatus as claimed in any of the foregoing claims, characterized in that the distance of the spraying device (8) in relation to the conveyor surface (2) is adjustable.

10. Apparatus as claimed in any of the foregoing claims, characterized in that the supporting surface is arranged higher than the spraying device.

11. Apparatus as claimed in any of the foregoing claims, characterized in that the frame (1) is height adjustable and is rollable by means of rotor wheels.

------

"1/2"

FIG.1

2/2

0164776

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 830 608 (MALLET & CO.) --- | | A 21 B 3/16 B 65 G 19/02 |
| A | US-A-2 576 638 (THE DE VILBISS CO.) --- | | |
| A | FR-A- 951 785 (THE DE VILBISS CO.) ----- | | |

**TECHNICAL FIELDS SEARCHED (Int. Cl.4)**

A 21 B 3/00
B 65 G 19/00
B 65 G 21/00
A 47 L 15/00

The present search report has been drawn up for all claims

| Place of search | Date of completion of the search | Examiner |
|---|---|---|
| THE HAGUE | 20-08-1985 | DE SMET F.P. |